(19) Europäisches Patentamt
European Patent Office
Office européen des brevets

(11) EP 4 682 191 A1

(12) **EUROPEAN PATENT APPLICATION**
published in accordance with Art. 153(4) EPC

(43) Date of publication:
**21.01.2026 Bulletin 2026/04**

(21) Application number: **24770202.0**

(22) Date of filing: **22.01.2024**

(51) International Patent Classification (IPC):
***C08J 9/04*** *(2006.01)*

(52) Cooperative Patent Classification (CPC):
**C08J 9/122; C08J 9/0023; C08J 9/0038; C08J 9/0061; C08J 9/04;** C08J 2203/06; C08J 2205/044; C08J 2371/12; C08J 2425/18

(86) International application number:
**PCT/JP2024/001659**

(87) International publication number:
**WO 2024/190080 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023041383**

(71) Applicant: **FURUKAWA ELECTRIC CO., LTD.**
**Tokyo 100-8322 (JP)**

(72) Inventors:
- **OKITA, Yutaka**
  **Tokyo 100-8322 (JP)**
- **YAMAMOTO, Syunji**
  **Tokyo 100-8322 (JP)**
- **UNNO, Taro**
  **Tokyo 100-8322 (JP)**
- **FUJII, Yoshito**
  **Tokyo 100-8322 (JP)**

(74) Representative: **Goddar, Heinz J.**
**Boehmert & Boehmert**
**Anwaltspartnerschaft mbB**
**Pettenkoferstrasse 22**
**80336 München (DE)**

# (54) MODIFIED POLYPHENYLENE ETHER RESIN FOAMED SHEET

(57) A modified polyphenylene ether resin foamed sheet is obtained by foaming modified polyphenylene ether resin including a flame retardant. The modified polyphenylene ether resin foamed sheet has a relative permittivity of 1.10 to 2.00, and a dielectric loss tangent (tan $\delta$) of $0.5 \times 10^{-3}$ to $2.5 \times 10^{-3}$. Also, a modified polyphenylene ether resin foamed sheet is obtained by foaming modified polyphenylene ether resin foamed resin including both a halogen-based flame retardant of a specified weight-average molecular weight and a phosphorus-based flame retardant, and an average bubble diameter and bubble number density of bubbles in the modified polyphenylene ether resin foamed sheet are within predetermined ranges.



Processed by Luminess, 75001 PARIS (FR)

## Description

TECHNICAL FIELD

The present invention relates to a modified polyphenylene ether resin foamed sheet.

BACKGROUND OF THE INVENTION

There has been a demand for resin materials that can be applied to housings used as electric/electronic components, electrical insulation materials, sealing materials, protector materials, or substrates for high-frequency electromagnetic wave controlling members.

Polyphenylene ether (abbreviated as PPE hereafter in some cases) resin has been widely used in electronic devices and other fields because of its excellent flame-retardant properties, thermal stability, hot-water resistance, and electrical characteristics. However, because of its extremely low melt-fluidity, polyphenylene ether resin is alloyed with other resin when being molded. Polystyrene, in particular, is completely compatible with polyphenylene ether and can be alloyed without a need of a compatibilizer to form " modified polyphenylene ether resin" , which is commercially available in the market. Such the polystyrene alloyed material is easy to mold, has an excellent balance between heat resistance and mechanical strength, and can be easily treated to have flame-retardant properties, and thus has been widely used. Here, polystyrene may be referred to as PS for simplicity in the descriptions hereafter.

In electric/electronics fields in particular, heat resistance, flame-retardant properties, and dimensional characteristics of the alloy with polystyrene-based resin have been highly evaluated, and the alloy has been used for flyback transformer cases, coil bobbins, relay sockets, adapter cases, switches, and so on. However, when such the modified polyphenylene ether resin is foamed, even though the flame-retardant properties thereof are superior compared to common foams, the foam still does not meet V- 1 or higher standard in flame-retardant property tests according to the UL standard for the reasons described below.

Taking advantage of its excellent characteristics, the modified polyphenylene ether resin has also been used as foams, and foams formed by a bead foaming method as in Patent Document 1, for example, are known. The resin foam in Patent Document 1 excels in flame-retardant properties and anti-static characteristics and is used for electronic devices and automotive parts. However, there is no specific disclosure regarding a bubble structure such as a bubble diameter and bubble density, dielectric characteristics, and surface characteristics. Also, although Patent Document 2 is known for a method for obtaining a modified polyphenylene ether resin foam that includes phosphate ester compound and has high heat resistance and flame-retardant properties, similarly, there is no specific disclosure regarding the bubble structure, dielectric characteristics, and surface characteristics. Also, Patent Document 3 is known for a method for obtaining a hollow blow-molded foam. However, the blow-molded foam of Patent Document 3 has a thickness that is larger than that of the present invention and the method is not for obtaining a foamed sheet. It was not an intention for such the foams to obtain foams with excellent dielectric characteristics and surface characteristics by controlling the bubble structure of the foams.

Moreover, Patent Document 4 has disclosed a foam for substrates with a bubble diameter of 0.3 to 1.5 μm, in which the foam is foamed by batch foaming a mixture of a predetermined ratio of resin having at least one of a crystal melting temperature, a glass transition temperature, and a liquid crystal transition temperature of 260°C or higher and non-crystalline resin such as modified polyphenylene ether having a glass transition temperature of 230°C or lower. However, the foam has a relative permittivity of 2.6 to 2.9, which is larger than that of the present invention. This is because, in such the invention, a foaming ratio of the resin is small and it has not achieved to further reduce the relative permittivity by introducing fine bubbles at high density. That is, to reduce the relative permittivity, the bubble density is to be increased while maintaining the fine bubbles.

Also, Patent Document 5 has disclosed a laminated foam in which an auxiliary layer on a back surface is a foam. In the invention, a relative permittivity in frequency bands of 79 GHz and 29 GHz is described, and the relative permittivity is in a range of 2.28 to 2.73 and a dielectric loss tangent (tan $\delta$) is in a range of 0.002 to 0.0077. A bubble diameter is 44 to 103 μm, and a foaming ratio is 9.2 times to 30.8 times. In the case of Patent Document 5, the bubble diameter exceeds 30 μm with the high foaming ratio and relative permittivity exceeding 2.0, and thus it is impossible to say that the dielectric characteristics are excellent.

Patent Document 6 has described manufacturing a foam with a bubble diameter of 20 μm or less and 10 μm or more by a batch method using various bubble core agents. However, the invention according to this document requires the bubble core agents, is not related to modified PPE foams, and is not intended for improvement of dielectric characteristics.

Patent Document 7 has disclosed a PPS resin foam added with a cross-linking agent using a batch foaming. An object of the invention is to provide a polyphenylene sulfide foam that excels in secondary formability while maintaining the basic characteristics of PPS resin, and a method for making the same. It is described that an average bubble diameter of such the PPS resin foam can be 20 μm or less. As can be seen from Patent Document 6 and Patent Document 7, when obtaining a fine bubble structure by using batch foaming, bubble core agents or cross-linking agents may be used as

necessary to control the bubble structure.

On the other hand, with the well-balanced high flame-retardant properties and low dielectric characteristics as mentioned above, the modified polyphenylene ether resin is expected to be used especially as high-frequency related components, and the foam thereof is expected to be applied, for example, to terahertz wave components that are expected to expand in the future. However, if the same low dielectric characteristics are to be demonstrated for terahertz waves, the foam is to have fine bubbles of at least 30 μm or less, or 10 μm or less if possible, when considering loss due to reflection and scattering at the time of radio wave transmission in the terahertz band.

RELATED ARTS

[Patent Document 1] Japanese Patent Publication No. 5642521
[Patent Document 2] Japanese Unexamined Patent Application Publication No. 2017-155196 (JP-A-2017-155196)
[Patent Document 3] Japanese Patent Publication No. 6106420
[Patent Document 4] Japanese Unexamined Patent Application Publication No. 2008-303247 (JP-A-2008-303247)
[Patent Document 5] Japanese Unexamined Patent Application Publication No. 2021-136540 (JP-A-2021-136540)
[Patent Document 6] Japanese Patent Publication No. 3138488
[Patent Document 7] Japanese Patent Publication No. 5809895

SUMMARY OF THE INVENTION

(PROBLEMS TO BE SOLVED BY THE INVENTION)

The above-mentioned Patent Document 1 and Patent Document 2 both have no descriptions on the bubble diameter. In general, it is difficult to suppress bubble growth in the methods shown in the documents, and it is impossible to make the bubble diameter smaller while making surface characteristics excellent at the same time. Although a bead foam molded body is used in Patent Document 1 and the similar method is assumed in the descriptions in Patent Document 2, it is difficult to make a sheet shape by the bead foaming, and, even if it is possible, there is an interface existing between particles, which is disadvantageous when considering bonding with copper foil or the like, for example.

If the modified polyphenylene ether resin is foamed, a contact area with air increases, which increases a combustion speed, thereby deteriorating flame-retardant properties. This makes it difficult to satisfy vertical flame-retardant performance that is generally required in high-frequency related fields. Thus, even though a fine-foamed sheet using modified polyphenylene ether resin has the flame-retardant properties that are superior compared to common foams, the foam still does not meet V-1 or higher standards in flame-retardant property tests according to the UL standard.

Compared to a non-foamed body, there are more contact points between air and resin in a foam, resulting in a significant deterioration in the flame-retardant properties thereof. Compared to non-foamed resin, a foam has a smaller amount of resin, which makes it easier to be softened by combustion heat, and, as a result, resin sagging may easily occur at the time of combustion. On the other hand, if an amount of a flame retardant added to the foam is increased to improve the flame-retardant properties, the flame retardant generally causes foaming inhibition and thus the foam having an intended bubble diameter or density may not be obtained as well as the surface characteristics of the foam may be deteriorated.

Thus, in the modified polyphenylene ether resin foamed sheet, it has been extremely difficult to obtain a foam that not only satisfies moldability but also facilitates complex and fine foaming, makes improvements in weight reduction and in flame-retardant properties, and provides excellent surface characteristics for the foamed sheet at the same time. So, it is an object of the present invention to provide, in the modified polyphenylene ether resin foamed sheet, a foamed sheet having excellent moldability, an extremely low relative permittivity and dielectric loss tangent in high frequencies, self-extinguishing properties or flame-retardant properties, and excellent surface characteristics.

(MEANS FOR SOLVING PROBLEMS)

A modified polyphenylene ether resin foamed sheet of the present invention is a sheet obtained by foaming modified polyphenylene ether resin that includes a flame retardant. The modified polyphenylene ether resin foamed sheet has a relative permittivity ranging from 1.10 to 2.00, and a dielectric loss tangent (tan $\delta$) ranging from $0.5 \times 10^{-3}$ to $2.5\times 10^{-3}$.

The modified polyphenylene ether resin foamed sheet of the present invention may be a modified polyphenylene ether resin foamed sheet in which an arithmetic mean surface roughness Ra of a surface thereof is 0.50 μm or less.

Here, even if only a predetermined amount of phosphorus-based flame retardant is included as the flame

retardant, an effect of improving the flame-retardant properties can be recognized. Thus, the modified polyphenylene ether resin foamed sheet may be a modified polyphenylene ether resin foamed sheet including only the phosphorus-based flame retardant as the flame retardant.

The modified polyphenylene ether resin foamed sheet may be a modified polyphenylene ether resin foamed sheet including both a halogen-based flame retardant with a weight-average molecular weight of 1,000 or more and 1,000,000 or less and the phosphorus-based flame retardant.

As above, using appropriate amounts of the phosphorus-based flame retardant and the predetermined halogen-based flame retardant can prevent foaming inhibition as described below and, moreover, can improve the flame-retardant properties to a level that satisfies the UL standard.

Also, the modified polyphenylene ether resin foamed sheet may have the relative permittivity ranging from 1.20 to 1.57, and the dielectric loss tangent (tan $\delta$) ranging from $1.0 \times 10^{-3}$ to $2.1 \times 10^{-3}$.

The modified polyphenylene ether resin foamed sheet of the present invention may also be a modified polyphenylene ether resin foamed sheet obtained by foaming modified polyphenylene ether resin that includes, as the flame retardant, the halogen-based flame retardant with a weight-average molecular weight of 1,000 or more and the phosphorus-based flame retardant, in which an average bubble diameter of bubbles of the modified polyphenylene ether resin foamed sheet is 1 to 30 $\mu$m and bubble number density is $1.8 \times 10^4$ to $9 \times 10^8$ /mm$^3$.

As above, for the bubble structure of the modified polyphenylene ether resin foamed sheet, the average bubble diameter is set within the range of 1 to 30 $\mu$m as fine bubbles and the bubble number density is set within the range from $1.8 \times 10^4$ to $9 \times 10^8$ /mm$^3$. As a result, the dielectric characteristics such as the relative permittivity and dielectric loss tangent (tan $\delta$) within the above ranges can be obtained.

Also, in the modified polyphenylene ether resin foamed sheet, the average bubble diameter of bubbles of the modified polyphenylene ether resin foamed sheet may be 1 to 22 $\mu$m and the bubble number density may be $2.0 \times 10^4$ to $8 \times 10^8$ /mm$^3$. With the finer average bubble diameter and a larger lower limit value of the bubble number density as above, the dielectric characteristics and surface characteristics of the foamed sheet can be further improved.

With regard to flame-retardant properties, even in a case in which only an inorganic flame retardant such as a phosphorus-based flame retardant is added, adding a flame retardant improves the flame-retardant properties and provides self-extinguishing properties at the time of combustion. However, increasing an amount of the flame retardant to be added may inhibit foaming performance, and thus it is difficult to expect effects of further improvement in flame-retardant properties.

Even if a specific halogen-based flame retardant is added to the phosphorus-based flame retardant as the flame retardant, unless the above-mentioned predetermined molecular amount of a polymer-based flame retardant is used and a range of composition of the flame retardant is controlled within a predetermined range, it is impossible to satisfy V-0, V-1 standards in UL94 standard flame-retardant property tests without affecting a foaming state, and to maintain the similar average bubble diameter and the bubble density as in a case in which no flame retardant is added. Here, with regard to the flame-retardant properties, the flame-retardant properties are to be improved and, in addition, foaming inhibition is not to occur. More specifically, a first object is to provide self-extinguishing properties to reduce combustibility of a foam by adding a flame retardant even if the foam is still combustible, and a second object is to obtain the foam in which a flame-retardant improvement level is raised to a level that satisfies V-0, V-1 standards in the UL94 standard flame-retardant property test.

Here, normally, in other manufacturing methods such as bead foaming, injection foaming, and extrusion foaming (cross-linked foaming or non-cross-linked foaming), it is difficult to make the average bubble diameter finer and to have the bubble density within the predetermined range as above, and, as a result, it is difficult to obtain the above-mentioned bubble structure. Also, even if it is possible to obtain a material having the above-mentioned bubble structure and dielectric characteristics from another manufacturing method instead of a fine foaming process of the present invention, a bubble diameter distribution of a foam manufactured in the other foaming process is large and it is difficult to keep surface characteristics of the foamed sheet in an excellent state, and thus it is difficult to keep a surface roughness Ra (an arithmetic mean surface roughness) of the foamed sheet within a range of 0.50 $\mu$m or less.

The modified polyphenylene ether resin foamed sheet of the present invention may have the arithmetic mean surface roughness Ra of 0.50 $\mu$m or less as above. Also, when considering a lower limit value of the arithmetic mean surface roughness Ra of a surface of the modified polyphenylene ether resin foamed sheet, the arithmetic mean surface roughness Ra is to be kept within a range from 0.08 to 0.50 $\mu$m, preferably from 0.10 to 0.40 $\mu$m, or more preferably from 0.10 to 0.30 $\mu$m, so that high frequency characteristics such as skin effects can be further improved, and thus this is more suitable for applications for substrates of high-frequency circuits and the like.

As for an average thickness of the modified polyphenylene ether resin foamed sheet, the modified polyphenylene ether resin foamed sheet having an average sheet thickness of 0.05 mm to 2.0 mm can be manufactured, and the average thickness of the sheet may also be 0.1 mm to 2.0 mm. For the average thickness of the modified polyphenylene ether resin foamed sheet of the present invention, it can be considered that, compared to the bead foaming, extrusion cross-linked foaming, and extrusion gas foaming etc., the thickness of the foamed sheet can be reduced since a batch foaming process, in which a molding process and a foaming process are separated when foaming a product, is used and, moreover, it is

possible to independently control impregnation and foaming of foaming gas. Thus, an upper limit of the foamed sheet is 2 mm and the lower limit value of the foamed sheet is to be at least 50 μm (0.05 mm) since a skin layer is formed on top and bottom of the sheet even if the sheet thickness is thin. At this time, after the fine foaming process is finished, roll rolling may be performed as necessary for adjustment etc. of the thickness and the surface characteristics.

When the modified polyphenylene ether resin foamed sheet is used to be tested in accordance with the UL-94 vertical method (20 mm vertical combustion test) of the U.S. UL standards to evaluate the flame-retardant properties, it is preferable that the test results of the modified polyphenylene ether resin foamed sheet satisfies V-0 and V- 1 standards. A material in which a base resin is added with a flame-retardant within the range of the present invention satisfies the V-0 and V-1 standards of the UL-94 below. However, if no flame retardant is added or an amount of the flame retardant added does not reach the range of the present invention, the flame-retardant properties cannot satisfy the V-0 and V-1 of the UL-94 vertical method of the U.S. UL standards.

The modified polyphenylene ether resin foamed sheet may be used for housings for electric/electronic components, electrical insulation materials, sealing materials, protector materials, or substrates for high-frequency electromagnetic wave controlling members.

(Mixing Modified Polyphenylene Ether Resin and Polystyrene Resin)

Here, a reason for mixing polystyrene resin to polyphenylene ether resin is to improve formability, since, although having excellent heat resistance and strength, polyphenylene ether resin has a low formability and cannot be formed. Here, a compounding amount of polyphenylene ether resin is 40 mass% or more and 80 mass% or less because the intended heat resistance and strength cannot be obtained if the compounding amount is below 40 mass%, and the compounding amount is 80 mass% or less because the formability is deteriorated when the compounding amount exceeds 80 mass%. In addition, normally, a compounding amount of polystyrene resin is the remains of the polyphenylene ether resin, which is 20 mass% or more and 60 mass% or less, and mixing polyphenylene ether resin with polystyrene resin with the above mixing ratio are well-known facts.

A flame retardant is added to the modified polyphenylene ether resin foamed sheet to provide self-extinguishing properties to reduce combustibility or to improve flame-retardant properties so as to obtain a polyphenylene foamed sheet with excellent dielectric characteristics and surface characteristics. However, ultimately, adding a halogen-based flame retardant and a phosphorus-based flame retardant at the same time can further improve the flame-retardant properties and the V-0, V-1 standards can be satisfied in the flame-retardant property test according to the UL94 standard. This is due to synergistic effects obtained by using both the flame retardants at the same time.

(Mixing Modified Polyphenylene Ether Resin, Polystyrene Resin, and Phosphorus-based Flame Retardant)

When a total of polyphenylene ether resin, polystyrene resin, and phosphorus-based flame retardant is set to be 100 mass%, a compounding amount of the polyphenylene ether resin to the entire mixture at this time is, when taking strength, heat resistance, and formability into consideration, 40 mass% or more and 80 mass% or less, which is almost the same as in the case of the mixture of polyphenylene ether resin and polystyrene resin without the phosphorus-based flame retardant.

Thus, a compounding amount of both polystyrene and the phosphorus-based flame retardant together is 20 mass% to 60 mass%, which is almost the same as in the case of the mixture of only modified polyphenylene ether resin and polystyrene resin. Here, if a content of polystyrene and the phosphorus-based flame retardant together takes a lower limit value, lower limit values for polystyrene and the phosphorus-based flame retardant are 15 mass% and 5 mass%, respectively.

Also, if the content of polystyrene and the phosphorus-based flame retardant together takes an upper limit value, upper limit values for polystyrene and the phosphorus-based flame retardant are 40 mass% and 20 mass%, respectively.

The content of polyphenylene ether resin, polystyrene resin, and phosphorus-based flame retardant at this time can be 40 mass% or more and 80 mass% or less, 15 mass% or more and 40 mass% or less, and 5 mass% or more and 20 mass% or less, respectively. In such the case, polystyrene resin and the phosphorus-based flame retardant within the above ranges are appropriately selected and added to a predetermined amount of polyphenylene ether resin such that the total is 100 mass% within the ranges.

Reasons for setting the respective upper and lower limits for the compounding amounts of polyphenylene ether resin, polystyrene resin, and phosphorus-based flame retardant will be described below.

The compounding amount of polyphenylene ether resin is 40 mass% or more and 80 mass% or less because the intended heat resistance and strength cannot be obtained when the compounding amount is below 40 mass%, and the compounding amount is 80 mass% or less because the formability is deteriorated when the compounding amount exceeds 80 mass%. This is similar to the case of the mixture of only modified polyphenylene ether resin and polystyrene resin.

Here, the above-mentioned compounding amount of polystyrene resin is 15 mass% or more and 40 mass% or less because formability is insufficient when the compounding amount is below the lower limit value, and the content of polyphenylene ether resin is insufficient and performance such as heat resistance and strength is insufficient if the compounding amount exceeds the upper limit value of 40 mass%.

Also, when the total of polyphenylene ether resin, polystyrene resin, and phosphorus-based flame retardant used in the modified polyphenylene ether resin sheet is 100 mass%, 5 mass% or more and 20 mass% or less of the phosphorus-based flame retardant may be included.

Also, a reason that the compounding amount of the phosphorus-based flame retardant is 5 mass% or more and 20 mass% or less is because, if the compounding amount is below the above-mentioned lower limit value, char (a carbonized layer that takes a three-dimensional structure via a solid phase during carbonization) formation at the time of combustion is insufficient so that interaction with a halogen-based flame retardant, which will be described below, cannot be obtained and intended flame-retardant performance cannot be obtained even with the halogen-based flame retardant being added, and if the compounding amount exceeds the upper limit value, foaming performance is deteriorated.

Instead of making the total of polyphenylene ether resin and polystyrene resin as 100 mass%, the total of polyphenylene ether resin, polystyrene resin, and phosphorus-based flame retardant is set to be 100 mass% because these are usually commercially available as a compound, which is to be used. In the present application, XYRON 340Z and 540Z by Asahi Kasei Corp. are used as such materials.

As a flame retardant to be used for the modified polyphenylene ether resin sheet, in addition to the phosphorus-based flame retardant, a halogen-based flame retardant as an oligomer or a polymer-based flame retardant may also be used.

An aspect of a specific halogen-based flame retardant is to add 5 pts.mass or more and 40 pts.mass or less thereof to 100 pts.mass of polyphenylene ether resin, polystyrene resin, and the phosphorus-based flame retardant.

Here, a composition of the base resin includes 5 mass% or more and 20 mass% or less of the phosphorus-based flame retardant to 100 mass% of polyphenylene ether resin, polystyrene resin, and the phosphorus-based flame retardant.

As a preferred aspect of a flame retardant of the modified polyphenylene ether resin foamed sheet, when the total of polyphenylene ether resin, polystyrene resin, and the phosphorus-based flame retardant is 100 mass%, 5 mass% or more and 20 mass% or less of the phosphorus-based flame retardant is included, and, in addition, 5 pts.mass or more and 40 pts.mass or less of a halogen-based flame retardant with a weight-average molecular weight of 1,000 or more and 1,000,000 or less is added to a case in which the total of polyphenylene ether resin, polystyrene resin, and the phosphorus-based flame retardant is 100 pts.mass. Consequently, the phosphorus-based flame retardant and the halogen-based flame retardant are used as the flame retardant. Preferably, the compounding amounts thereof are as described above. By adding the halogen-based flame retardant within the above range, the char formation by the phosphorus-based flame retardant is combined together with radical trapping and oxygen blocking effects by the halogen-based flame retardant while maintaining the foaming performance, and thus high flame-retardant properties can be achieved. As a result, a foamed sheet that satisfies the V-0, V-1 standards of the UL94 standard can be obtained as described below.

A weight-average molecular weight of the flame retardant that is to be used in the modified polyphenylene ether resin foamed sheet is preferably 1,000 or more, and more preferably 1,000 to 1,000,000. At this time, the flame retardant may be either brominated carbonate oligomer or brominated polystyrene. By setting the molecular weight of the halogen-based flame retardant at the above-mentioned lower limit value or more, an excellent resin foamed sheet without foaming inhibition can be obtained.

Using such the modified polyphenylene ether resin foamed sheet allows the modified polyphenylene ether resin foamed sheet to have flame-retardant properties. At this time, it is preferable that the weight-average molecular weight thereof is 5,000 or more since the flame retardant can act more stably, and it is more preferable that the weight-average molecular weight is 5,000 or more and 50,000 or less. The above range is preferred in a case of brominated carbonate oligomer, while the upper limit is more preferably higher and 1,000,000 or less in a case of a polymer with a higher polymerization degree such as brominated polystyrene. This is because if the molecular weight exceeds 1,000,000, bubble growth may be suppressed on the contrary and it may be difficult to obtain the intended foaming ratio and bubble density.

(EFFECTS OF THE INVENTION)

According to the present invention, in a modified polyphenylene ether resin foamed sheet, a foamed sheet having excellent moldability, an extremely low relative permittivity and a dielectric loss tangent in high frequencies, high flame-retardant properties, and excellent surface characteristics can be obtained. Consequently, the present invention can provide a modified polyphenylene ether resin foamed sheet with low dielectric characteristics, having excellent surface characteristics and excellent self-extinguishing properties or flame-retardant properties, that can be used for housings for electric/electronic components, electrical insulation materials, sealing materials, protector materials, high-frequency substrates, and substrates for electromagnetic wave controlling members.

DETAILED DESCRIPTION

A modified polyphenylene ether resin foamed sheet of the present invention is formed to include a flame retardant. The flame retardant may be formed of a phosphorus-based flame retardant, or may be formed to include the phosphorus-based flame retardant and a specific halogen-based flame retardant. The modified polyphenylene ether resin foamed sheet of the present invention has a relative permittivity ranging from 1.10 to 2.00, and a dielectric loss tangent (tan $\delta$) ranging from $0.5 \times 10^{-3}$ to $2.5 \times 10^{-3}$. Alternatively, another aspect of the configuration of the present invention may be a modified polyphenylene ether resin foamed sheet that is made by foaming modified polyphenylene ether resin including, as a flame retardant, a halogen-based flame retardant with a weight-average molecular weight of 1,000 or more and 1,000,000 or less and a phosphorus-based flame retardant, and an average bubble diameter of bubbles of the modified polyphenylene ether resin foamed sheet is 1 to 30 $\mu$m and bubble number density is $1.8 \times 10^4$ to $9 \times 10^8$ bubbles /$mm^3$. Firstly, as the above-mentioned resin component according to a preferred embodiment of the present invention, modified polyphenylene ether resin including polystyrene will be described. Then, a component composition of the phosphorus-based flame retardant and the specific halogen-based flame retardant will be described, followed by descriptions on density and bubble diameters of the resin, a method for making the resin, and physical characteristics of the foamed sheet.

(Polyphenylene Ether Resin)

Polyphenylene ether resin used in the present invention may be a homopolymer formed of repeating units represented by the following general formula (1), or a copolymer including repeating units represented by the following general formula (1).

[CHEMICAL FORMULA 1]

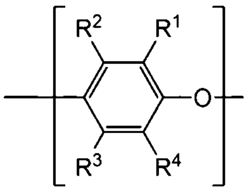

(1)

[In the formula, $R^1$, $R^2$, $R^3$, and $R^4$ may be, independently and respectively, a monovalent group selected from a group consisting of a hydrogen atom, a halogen atom, an alkyl group of 1 to 7 carbon atoms, a phenyl group, a haloalkyl group, an aminoalkyl group, and a hydrocarbonoxy group, which may be identical or different from one another. Also, two adjacent groups may be bound together to form a ring.]

$R^1$ and $R^4$ in the formula (1) are preferably straight-chained or branched-chained alkyl groups of 1 to 6 carbon atoms, and more preferably alkyl groups of 1 to 3 carbon atoms. Particularly, methyl groups and ethyl groups are preferable. $R^2$ and $R^3$ are preferably hydrogen atoms or straight-chained or branched-chained alkyl groups of 1 to 6 carbon atoms, and more preferably hydrogen atoms or alkyl groups of 1 to 3 carbon atoms. The hydrogen atoms are particularly preferable.

One type of the above polyphenylene ether may be used alone, or two or more types thereof may be used together.

Although a molecular weight of polyphenylene ether is not particularly limited, it is preferable that a weight-average molecular weight thereof is 10,000 or more and 30,000 or less.

In the present invention, " modified" means that the above-mentioned polyphenylene ether is alloyed by polystyrene, which will be mentioned in the following section, or that a certain functional group substitutes a specific part, for example.

In the modified polyphenylene ether resin foamed sheet of the present invention, it is preferable to use modified polyphenylene ether resin obtained by mixing the above-mentioned polyphenylene ether and polystyrene to be alloyed. Although a mixing ratio of polyphenylene ether and polystyrene at this time is not particularly limited, it is preferable to include 40 mass% or more and 80 mass% or less, or more preferably 50 mass% or more and 70 mass% or less, of polyphenylene ether when a ratio of both polyphenylene ether and polystyrene with the phosphorus-based flame retardant is 100 mass%.

(Polystyrene)

In the present description, unlimited polystyrene-based resin includes, for example, a homopolymer or a copolymer of styrene-based monomers such as styrene, $\alpha$-methylstyrene, vinyltoluene, chlorostyrene, ethylstyrene, i-propylstyrene, dimethylstyrene, and bromostyrene, a copolymer including a styrene-based monomer as a main component and a vinyl monomer that can be polymerized with the styrene-based monomer, and a high-impact polystyrene such as a copolymer of a styrene-based monomer and a rubber molecule such as butadiene, a homopolymer or copolymer of styrene-based monomers, or a mixture or a polymer of a copolymer of a styrene-based monomer and a vinyl monomer with a diene-based rubber polymer.

Examples of homopolymer polystyrene-based resin include polystyrene, poly α-methylstyrene, and polychlorostyrene, and examples of copolymer polystyrene-based resin include styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl substituted phenylmaleimide copolymer, styrene-acrylic acid copolymer, styrene-methacrylic acid copolymer, styrene-methyl methacrylate copolymer, styrene-n-alkyl acrylate copolymer, styrene-n-alkyl methacrylate copolymer, and ethyl vinylbenzene-divinylbenzene copolymer, a terpolymer such as ABS, butadiene-acrylonitrile-$\alpha$-methylbenzene copolymer, but not limited thereto.

Also included are graft copolymers such as styrene-grafted polyethylene, styrene-grafted ethylene-vinyl acetate copolymer, (styrene-acrylic acid) grafted polyethylene, and styrene-grafted polyamide. One type of the above may be used alone, or two or more types may be combined.

It is preferable that the polystyrene-based resin has a weight-average molecular weight of 180,000 to 500,000. In the present description, the weight-average molecular weight is determined by performing a measurement by gel permeation chromatography (GPC) and obtaining a peak molecular weight of the chromatogram by using a calibration curve (made by using a peak molecular weight of standard polystyrene) obtained from a measurement of commercially available standard polystyrene. A carrier and a column may be selected according to a subject to be measured. Tetrahydrofuran (THF) may be used as the carrier, for example. In the present description, unless otherwise specified, a molecular weight of an oligomer or a polymer refers to the molecular weight determined by the above method.

When the total of polyphenylene ether resin, polystyrene resin, and the phosphorus-based flame retardant is set to be 100 mass%, polystyrene is preferably included 15 mass% or more and 40 mass% or less, more preferably 15 mass% or more and 37 mass% or less, and particularly preferably 25 mass% or more and 35 mass% or less.

(Phosphorus-based flame retardant)

Preferably, the modified polyphenylene ether resin foamed sheet of the present invention further includes a phosphorus-based flame retardant. When the phosphorus-based flame retardant is included, self-extinguishing properties are to be demonstrated and, at the same time, even higher flame-retardant properties can be obtained by interaction with a halogen-based flame retardant, which will be described below.

As the phosphorus-based flame retardant, a phosphate ester compound is preferable. Although not specifically limited, a phosphate ester compound that is effective as a flame retardant is preferable. Also, as the above-mentioned phosphate ester compound, bisphenol A bis (diphenyl phosphate) or aromatic condensed phosphate ester compound are preferable, for example. The above-mentioned phosphate ester compound may be, although not limited to the following, a phosphate ester compound represented by the following general formula (2) or a condensed compound thereof, for example.

[CHEMICAL FORMULA 2]

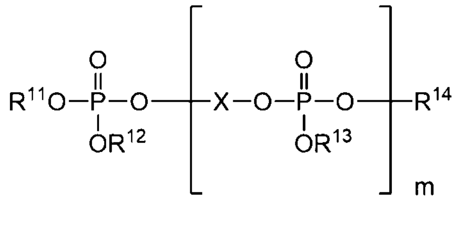

(2)

[In the formula, $R^{11}$, $R^{12}$, $R^{13}$, and $R^{14}$ may be, independently and respectively, a monovalent group selected from a group consisting of a hydrogen atom, a halogen atom, an alkyl group (with carbon atoms of preferably 1 to 12, more preferably 1 to 6, or furthermore preferably 1 to 3), a cycloalkyl group (with carbon atoms of preferably 3 to 24, more preferably 3 to 12, or furthermore preferably 3 to 6), an aryl substituted alkyl group (with carbon atoms of preferably 7 to 22, more preferably 7 to 18, or furthermore preferably 7 to 10), an aryl group (with carbon atoms of preferably 6 to 22, more preferably 6 to 18, or furthermore preferably 6 to 10), a halogen substituted aryl group (with carbon atoms of preferably 6 to 22, more preferably 6 to 18, or furthermore preferably 6 to 10), and an alkyl substituted aryl group (with carbon atoms of preferably 7 to 22, more preferably 7 to 18, or furthermore preferably 7 to 10), which may be identical or different from one another. X represents an arylene group (with carbon atoms of preferably 6 to 22, more preferably 6 to 18, or furthermore preferably 6 to 10)

containing group. m is an integer of 0 or higher.] Note that if the phosphate ester compound is a mixture of phosphate ester and/or the condensed compound thereof with different values for the above-mentioned m, m shows an average value thereof. When m = 0, the compound of the general formula (2) shows a monomer of phosphate or phosphate ester. One type of the above-mentioned phosphate ester compound may be used alone, or two or more types thereof may be used together.

Examples of typical phosphate ester monomers include, but not limited to, for example, triphenyl phosphate, tricresyl phosphate, and trixylenyl phosphate.

The phosphorus-based flame retardant is preferably a condensed phosphate ester compound, and more preferably a condensed phosphate ester compound in which m in formula (2) is 1 or more. Although an upper limit value of m may be suitably determined, the upper limit value may be 5 or less, for example.

From a viewpoint of flame-retardant properties and heat-resistant characteristics that manifest when the phosphorus-based flame retardant is kneaded into the resin component of the present embodiment, it is preferable that at least one of the above-mentioned $R^{11}$, $R^{12}$, $R^{13}$, and $R^{14}$ is an aryl group, a halogen substituted aryl group, or an alkyl substituted aryl group, and it is more preferable that all of the $R^{11}$, $R^{12}$, $R^{13}$, and $R^{14}$ are aryl groups, halogen substituted aryl groups, or alkyl substituted aryl groups. Also, from the same viewpoint, phenyl groups, xylenyl groups, cresyl groups, or halogenated derivatives of the above are preferable as the preferable aryl groups, halogen substituted aryl groups, and alkyl substituted aryl groups.

As the arylene group containing group for the above-mentioned X, it is preferable to use residue after two hydroxyl groups are eliminated from either phenylene, resorcinol, hydroquinone, bisphenol A, bisphenol F, biphenol, or halogenated derivatives thereof.

Examples of the above-mentioned phosphate ester compound include, but not limited to, a resorcinol-bisphenyl phosphate compound, a bisphenol A-polyphenyl phosphate compound, and a bisphenol A-polycresyl phosphate compound.

Examples of the condensed phosphate ester compound include compounds represented by the following formulas (3-1), (3-2), (4-1), and (4-2).

[CHEMICAL FORMULA 3]

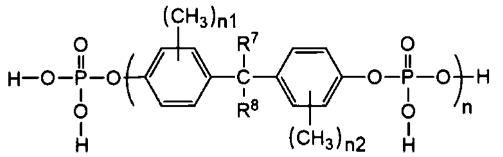

(3-1)

[CHEMICAL FORMULA 4]

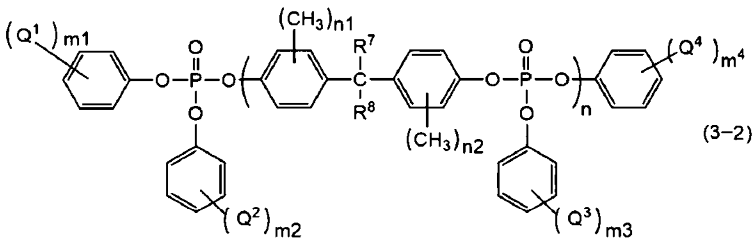

(3-2)

[CHEMICAL FORMULA 5]

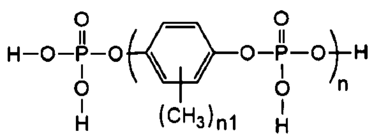

(4-1)

[CHEMICAL FORMULA 6]

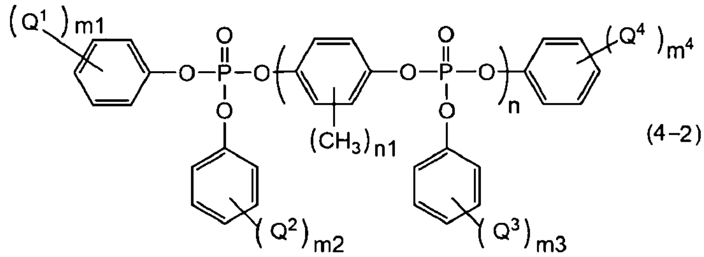

(4-2)

In formulas (3-1), (3-2), (4-1), and (4-2), $Q^1$, $Q^2$, $Q^3$, and $Q^4$ each are a substituted group, and each independently represent an alkyl group of 1 to 6 carbon atoms. $R^7$ and $R^8$ independently represent a hydrogen atom or a methyl group. n1 and n2 independently represent an integer of 0 to 2, and m1, m2, m3, and m4 are independently represent an integer of 0 to 3. Although there are no $Q^1$ etc. in formulas (3-1) and (4-1), it may be read as definitions of the groups that exist. The same applies hereafter.

In the condensed phosphate ester represented by formulas (3-1), (3-2), (4-1), and (4-2), n is an integer of 1 or more, or, preferably, an integer of 1 to 3.

Among the above, in formulas (3-1), (3-2), (4-1), and (4-2), it is preferable that $R^7$ and $R^8$ are condensed phosphate ester, which is a methyl group, and all of $Q^1$, $Q^2$, $Q^3$, and $Q^4$ are methyl groups of condensed phosphate ester in which n1 and n2 are 0, and m1, m2, m3, and m4 are independently an integer of 0 to 3, with n ranging from 1 to 3. Among the above, the one that includes 50 mass% or more of phosphate ester within the components with n being 1 in particular is more preferable. Commercially available flame retardants, such as " CR-741" , " CR733S" , and " PX-200" (trade names) manufactured by DAIHACHI CHEMICAL INDUSTRY CO., LTD., may be used. More specifically, bisphenol A bis-diphenyl phosphate and resorcinol bis-dikylyl phosphate are particularly preferable as the phosphate ester.

As for the compounds in formulas (3-1), (3-2), (4-1), and (4-2), those disclosed in Japanese Unexamined Patent Application Publication No. 2010-123933 may be referenced.

A compound represented by the following formula (5) or (6) is a specific example of the phosphorus-based flame retardant.

[CHEMICAL FORMULA 7]

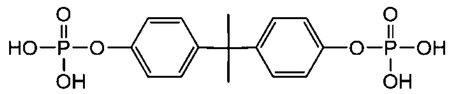

(5)

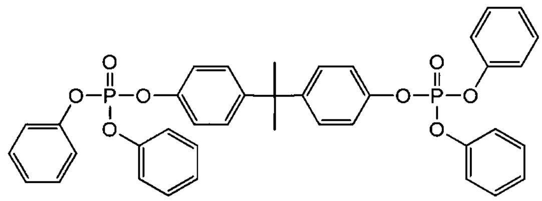

(6)

From a viewpoint of capability of obtaining a resin component having more excellent foaming performance, heat resistance, and flame-retardant properties, a content of the phosphorus-based flame retardant in the modified polyphenylene ether resin foamed sheet of the present embodiment is preferably 5 mass% or more and 20 mass% or less, or more preferably 7 mass% or more and 15 mass% or less, when the total of polyphenylene ether resin, polystyrene resin, and the phosphorus-based flame retardant is 100 mass%.

(Halogen-based Flame Retardant)

It is preferable that the modified polyphenylene ether resin foamed sheet of the present invention includes a specific halogen-based flame retardant as a constituent resin material. Although a halogen atom that is to be included in the halogen-based flame retardant is not limited to, but bromine or chlorine is preferable, and bromine is more preferable. It is preferable that the halogen-based flame retardant is a brominated carbonate oligomer or brominated polystyrene.

It is preferable that the halogen-based flame retardant is a compound having a bisphenol skeleton, and, more specifically, is formed of a compound (a brominated carbonate oligomer) having the following structural formula (formula (7)).

[CHEMICAL FORMULA 8]

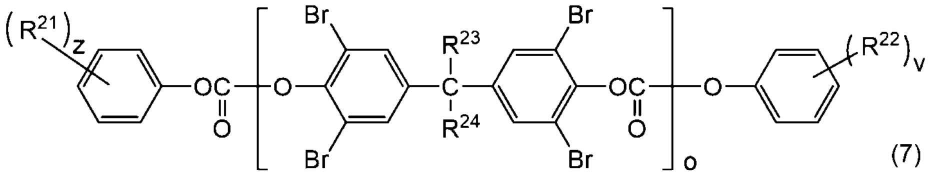

(7)

$R^{21}$ and $R^{22}$ represent halogen atoms or alkyl groups. A bromine atom is preferable as the halogen atom. As the alkyl group, an alkyl group with 1 to 12 carbon atoms is preferable, an alkyl group with 1 to 6 carbon atoms is more preferable, and an alkyl group with 1 to 3 carbon atoms is further preferable. $R^{23}$ and $R^{24}$ represent hydrogen atoms or alkyl groups with 1 to 3 carbon atoms. z and v represent integers of 0 to 5. o is a natural number determined depending on molecular weights, and is preferably 4 to 15.

Specific examples of the halogen-based flame retardant are compounds of the following formulas (7 - 1) and (7 - 2).

[CHEMICAL FORMULA 9]

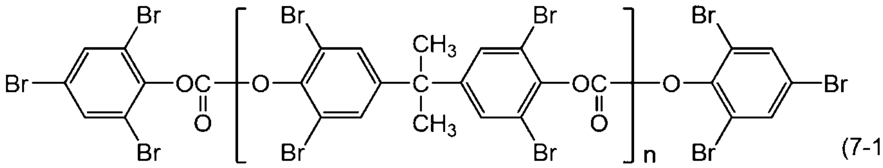

(7-1)

n is 4 to 15 (the molecular weight of approximately 3,000 to approximately 10,000).

[CHEMICAL FORMULA 10]

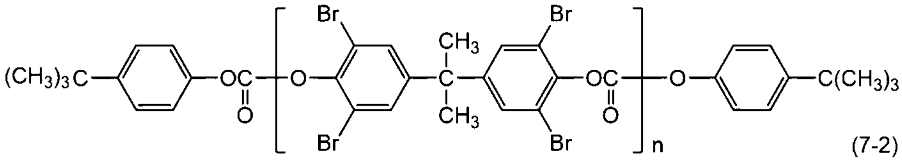

(7-2)

n is 4 to 15 (the molecular weight of approximately 2,500 to approximately 9,000).

As another embodiment that is different from the above, the halogen-based flame retardant is preferably brominated polystyrene having repeating constitutional units represented by the following formula (8). In the formula, x represents a natural number of 500 to 10,000. y represents a natural number of 1 to 5.

[CHEMICAL FORMULA 11]

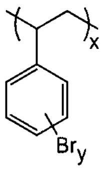

(8)

A molecular weight of the halogen-based flame retardant is important in a viewpoint of maintaining foamability of the resin, and the halogen-based flame retardant is preferably an oligomer or a polymer having a weight-average molecular weight of 1,000 to 1,000,000, or more preferably an oligomer or a polymer having a weight-average molecular weight of 5,000 to 800,000 (50,000 in a case of the oligomer). If the molecular weight is smaller than the above-mentioned lower limit value, the flame retardant may be recognized as foreign substance during foaming and may induce gas diffusion, thereby inhibiting foamability. Also, if the molecular weight exceeds the above-mentioned upper limit value, bubble growth may be inhibited and a foam with intended density cannot be obtained. However, while the above range is preferable in a case of a brominated carbonate oligomer, it is preferable that the upper limit is even higher and is 1,000,000 or less in a case of a polymer with a high degree of polymerization such as brominated polystyrene. In the present description, the ' molecular weight' means' weight-average molecular weight' unless otherwise specified. The method for measuring the weight-average molecular weight is as described above.

Although a content of the halogen-based flame retardant is not particularly limited, it is preferable that the content of the halogen-based flame retardant is preferably 5 pts.mass or more and 40 pts.mass or less, more preferably 10 pts.mass or more and 40 pts.mass or less, or even more preferably 20 pts.mass or more and 40 pts.mass or less, when the total of polyphenylene ether resin, polystyrene resin, and the phosphorus-based flame retardant is 100 pts.mass.

<Density and Foaming Ratio of Resin>

Density of the resin configuring the modified polyphenylene ether resin foamed sheet of the present invention is preferably 0.60 g/cm$^3$ to 0.10 g/cm$^3$, more preferably 0.50 g/cm$^3$ to 0.15 g/cm$^3$, or even more preferably 0.30 g/cm$^3$ to 0.15 g/cm$^3$. The density of resin is an indicator that can show a degree of foaming, and is a variable being common with the foaming ratio in such the point. The foaming ratio of the resin in the present invention is preferably 2 times to 12 times, more preferably 2 times to 10 times, or even more preferably 2 times to 7 times. The density of the resin (the foaming ratio) being in the above range means that there are larger number of bubbles contained in the foamed sheet, which makes the permittivity closer to that of the air, thereby achieving the low permittivity of the relative permittivity.

<Average Bubble Diameter>

An average bubble diameter of bubbles contained in the resin configuring the modified polyphenylene ether resin foamed sheet of the present invention is to satisfy 1 to 30 $\mu$m. Here, a lower limit value of the average bubble diameter is preferably 1.0 $\mu$m or more, or more preferably more than 1.5 $\mu$m. For the upper limit value, 30 $\mu$m or less is preferable, 28 $\mu$m or less is more preferable, 26 $\mu$m or less is further preferable, 22 $\mu$m or less is furthermore preferable, or 18 $\mu$m or less is even more preferable. Also, the average bubble diameter is more preferably 12 $\mu$m or less, desirably 10 $\mu$m or less, or particularly preferably 8 $\mu$m or less. In the foamed sheet of the present invention, the average bubble diameter of bubbles being as small as above has some advantages of excellent formability, suitably achieving the low relative permittivity and low dielectric loss tangent, and achieving the surface characteristics with small surface roughness.

<Bubble Number Density>

Here, the relative permittivity, which is a dielectric characteristic, is better when the average bubble diameter of the foamed sheet is smaller. However, if the foaming ratio is low, bubble density in a sheet cross section of the resin foamed sheet is low, which, as a result, increases the proportion of the resin component. This increases probability of existence of bubble-free areas around the bubbles, and, at the same time, increases thickness of cell walls of the bubbles. So, to reduce the relative permittivity, it is not sufficient to only reduce the bubble diameter, but, since loss due to the bubble-free area and the bubble walls may increase, it is better to reduce the bubble diameter of the foamed sheet and, at the same time, to increase the bubble number density of the foamed-sheet cross section to a certain degree. That is, to improve the dielectric characteristics (the relative permittivity and tan $\delta$) of the present invention, not only the average bubble diameter of the foam is to be set within a predetermined range of 1 to 30 $\mu$m, or more preferably 1 to 22 $\mu$m, but also the bubble number density is to be set higher. From such the viewpoints, the bubble number density in the foamed sheet of the present invention is $1.8 \times 10^4$ to $9.0 \times 10^8$ bubbles /mm$^3$ or $2.0 \times 10^4$ to $9.0 \times 10^8$ bubbles /mm$^3$, or preferably $1.0 \times 10^5$ to $9.0 \times 10^8$ bubbles /mm$^3$, more preferably $1.0 \times 10^6$ to $9.0 \times 10^8$ bubbles /mm$^3$, and even more preferably $3.0 \times 10^6$ to $7.5 \times 10^8$ bubbles /mm$^3$.

<Method for Making Foamed Sheet (Fine Foaming Process)>

A fine foaming process is a batch method and is a process in which, firstly, inert gas (e.g., nitrogen gas or carbon dioxide gas) at high pressure as a foaming agent for a solid resin sheet is sufficiently dissolved at a room temperature inside a high-pressure vessel until a saturated amount of dissolution of the gas is reached, and then the gas is depressurized or heated inside the high-pressure vessel so that phase separation due to thermodynamic instability of the gas contained in the resin is induced for foaming. A specific example of the process is a method with the following three steps. Firstly, a method for making the polyphenylene ether resin foamed sheet of the present embodiment employs a process to have the resin contain non-reactive gas under pressure (hereinafter, referred to as " first process" ). Next process is a process of heating the obtained thermoplastic resin under no pressure in a temperature ranging from a peak crystallization temperature of the resin or higher to a peak melting point temperature or lower of the resin as measured by a differential scanning calorimeter to foam the resin (hereinafter, referred to as " second process" ). Finally, a process of cooling the obtained thermoplastic resin (hereinafter, referred to as " third process" ) is employed.

The average bubble diameter of the foamed sheet can be adjusted by holding time and holding temperature in the second process.

<Surface Roughness>

When an alternating current flows in a conductor, the higher the frequency of the current is, the less current is likely to flow in a center part of the conductor, and thus the current flows only in a surface layer, which is called a skin effect. Also, a relationship between surface roughness and transmission loss in a copper circuit for high frequencies is that a signal transmission path becomes longer and signal loss increases when unevenness of the surface is greater than a skin depth, and the signal transmission path becomes shorter and the signal loss decreases when the unevenness is smaller than the skin depth. Thus, it is better that the surface roughness of the foamed sheet is low. Especially in high-frequency bands such as GHz and THz bands, the surface characteristics of the foamed sheet may affect surface characteristics of the circuit material, which may affect the loss. Also, in the resin foamed sheet that is expected to be applied to circuit substrate materials, when considering further enhancement in circuit accuracy in the future, the surface roughness of the foamed sheet is to be reduced taking an influence of the unevenness of the substrate surface to the surface characteristics of the circuit to be laminated into consideration. Here, for the surface roughness, average unevenness of the sheet surface is important, and thus arithmetic mean surface roughness Ra is to be used as the surface roughness in the present invention. From such a viewpoint, the surface roughness Ra of the polyphenylene ether resin foamed sheet is 0.10 to 0.50 $\mu$m, preferably 0.10 to 0.35 $\mu$m, more preferably 0.10 to 0.30 $\mu$m, or even more preferably 0.10 to 0.25 $\mu$m. As above, the surface roughness as a surface quality of the resin foamed sheet of the present invention is excellent because, in the fine foaming process, a gas permeation process is separated from a foaming process in the present foaming method, and this makes the bubble diameter smaller, thereby stabilizing bubble diameter distribution. Thus, the surface characteristics can be easily stabilized, and, by combining the roll process as mentioned above, the arithmetic mean surface roughness Ra, which is an index for surface roughness, can be kept low.

<Relative Permittivity and Dielectric Loss Tangent>

Having the low relative permittivity and low dielectric loss tangent, the foamed sheet can demonstrate suitable performance when used in housings for electric/electronic components, electrical insulation materials, sealing materials, protector materials, substrates for high-frequency, or substrates for electromagnetic wave controlling members. From such viewpoints, the relative permittivity of the foamed sheet is preferably 1.10 to 2.00, more preferably 1.10 to 1.60, further more preferably 1.10 to 1.50, or particularly preferably 1.10 to 1.35. The dielectric loss tangent (tan $\delta$) is preferably $0.5 \times 10^{-3}$ to $2.5 \times 10^{-3}$, more preferably $0.7 \times 10^{-3}$ to $2.2 \times 10^{-3}$, particularly preferably $1.0 \times 10^{-3}$ to $2.0 \times 10^{-3}$, or even desirably $1.0 \times 10^{-3}$ to $1.8 \times 10^{-3}$, or may be $1.0 \times 10^{-3}$ to $1.5 \times 10^{-3}$.

The relative permittivity is the value measured by a method described in Working Examples.

WORKING EXAMPLES

(Measurement Method)

Foaming ratio and foam density were measured as follows.

<Method for Measuring Foaming Ratio>

A foaming ratio is an apparent ratio commonly used for a resin foam. The apparent ratio can be calculated by cutting out a test piece of 10 cm $\times$ 10 cm in size from a resin foamed sheet, measuring the weight (W1 [g]) of the test piece, and then measuring thickness (the measuring equipment is in accordance with JISK6767) at the four corners and at the center of the test piece to find an average value (T [cm]) of the five points, and by using formula (1) below.

$$\text{Apparent ratio (Forming Ratio)} = 10 \times 10 \times T / W1 \qquad (1)$$

<Method for Measuring Foam Density>

Density of the resin foamed sheet was measured according to a method conforming to JIS K7222-1999, " Cellular plastics and rubbers - Determination of apparent density" . Test pieces of 10 cm $\times$ 10 cm in size were cut out from the resin foamed sheet, which had been left at 23°C $\pm$ 2°C for 72 hours or more after molding for condition adjustment, to be used.

To be specific, the foam density was calculated by using a following formula (2). The unit for the foam density is g/cm$^3$.

[EQUATION 1]

$$\rho_a = \{(m + ma)\} / V \qquad (2)$$

wherein m represents a mass (g) of the test piece, V represents a volume ($cm^3$) of the test piece, and ma represents a mass (g) of displaced air.

Since a foaming ratio of the displaced air is low and thus ma (i.e., the mass of the displaced air) can be ignored, the calculation was done ignoring ma. Measurements were taken five times, and an average value of the measurement results of all the test pieces was calculated as the density.

<Method for Measuring Bubble Diameter>

A bubble diameter was obtained according to ASTMD3576-77. An SEM photograph of a longitudinal cross section of the sheet was taken, straight lines were drawn horizontally and vertically on the SEM photograph, and chord lengths t of bubbles crossed by the straight lines were averaged. An average bubble diameter d was obtained from the following formula: $d = t / (0.616 \times M)$, wherein M is a magnification of the photograph. The average bubble diameter was obtained by taking SEM photograph measurements of three different views, and the average value thereof was used as the average bubble diameter.

<Method for Measuring Bubble Number Density>

An SEM photograph of a longitudinal cross section of the polyphenylene ether resin foamed sheet was taken, and five regions of 100 $\mu$m $\times$ 100 $\mu$m were randomly selected on the SEM photograph and the number of bubbles existing in each region was counted. The number of bubbles per 1 $mm^2$ based on each region was calculated from each counted numbers to be the number of bubbles per 1 $mm^2$ based on each region. An average value of the number of bubbles per 1 $mm^2$ based on each of the five regions was calculated as bubble density (bubbles/$mm^2$).

The obtained number of bubbles per 1 $mm^2$ was raised to the power of (3/2) to be the number of bubbles per 1 $mm^3$ based on each region. An average value of the number of bubbles per 1 $mm^3$ based on each of the five regions was calculated as bubble density (bubbles /$mm^3$).

When measuring the bubble diameter or the bubble number density, it is preferable that a plurality of SEM photographs (preferably three or more) are prepared and an average value of the values calculated for each of the SEM photographs is to be taken.

<Measurement of Relative Permittivity and Dielectric Loss Tangent>

A relative permittivity and dielectric loss tangent were measured by using a cavity resonator perturbation method with a measurement frequency set at 2GHz. As the relative permittivity $\varepsilon_r$ and dielectric loss tangent tan $\delta$, a complex relative dielectric constant in a planar direction of the polyphenylene ether resin foam resin sheet can be measured by the cavity resonator method. In the present invention, the relative permittivity was measured by the cavity resonator method at a resonant frequency of 2GHz using a sample of 78mm long $\times$ 2.4 mm wide $\times$ 1mm thick. For equipment to be used for the measurement, for example, CP461 manufactured by Kanto Electronics Application & Development Inc. can be used as a cavity resonator, and E8361A manufactured by Agilent Technologies, Inc., can be used as a network analyzer.

<Measurement of Surface Roughness>

For surface characteristics evaluation, to evaluate overall surface characteristics of the modified polyphenylene ether foamed sheet, surface characteristics of the foamed sheet of the present invention are evaluated by measuring Ra instead of Rz, which is largely affected by maximum unevenness.

Arithmetic mean roughness of Ra was determined in accordance with JISB0601: 2013. For the measurement, Handysurf E-30A (by TOKYO SEIMITSU CO., LTD.) was used. In each measurement, a reference length was set to be 2.5 mm. If the surface roughness Ra is 1.0 $\mu$m or less in the present invention, for example, this means that, on the surface of the modified PPE foamed sheet, five measurement lines are randomly determined in an MD direction and the arithmetic mean roughness of the measurement value on each measurement line is measured to find an average roughness of the obtained five measurement values, and five measurement lines are randomly determined in a TD direction and the arithmetic mean roughness of the measurement value on each measurement line is measured, and an averaged value of the average roughness of the obtained five measurement values in both directions is 1.0 $\mu$m or less. That is, the surface roughness in the present invention evaluates the average of both MD and TD directions.

Here, to add influence of the surface roughness in the TD direction as well as in the MD direction, the average in the both directions is used as the surface characteristics. This is because the surface characteristics often excel in the MD

direction than in the TD direction since the material is sometimes passed through rolls at the time of manufacturing the sheet material and, at this time, in addition to pressure effects on the surface of the sheet from the rolls, tension is also added in the MD direction to the sheet to stretch the sheet.

<Test on Flame-Retardant Properties>

For testing flame-retardant properties, as levels of providing flame-retardant properties, two stages were set: the first stage was an evaluation of oxygen index based on a combustibility test of plastics according to JIS K 7201-2:2021 to evaluate flammability, flammability and self-extinguishing properties, flame-retardant properties, and so on to find out whether using a flame retardant can improve flame-retardant properties even a little; and the second stage was a flame-retardant property test according to the UL94 standard to find out whether V-0, V-1 can be satisfied in a vertical flame-retardant test.

[Combustion Test on Plastics based on JIS K7201-2]

A minimum oxygen volume fraction in a mixture of oxygen and nitrogen at 23°C ± 2°C, at which a material can continue flaming combustion under the specific test conditions, is expressed as a percentage (%).

A test piece mounted on a specific test piece support is used in the test, which is performed in a transparent cylinder in which mixed gas of oxygen and nitrogen flows upward as laminar flow. The test is performed at a room temperature after condition adjustments. In an upper-end ignition procedure, flame is brought into contact with an upper end of the test piece for up to 30 seconds, during which the flame is moved away every five seconds to see if the test piece is burning. This method is to prevent the temperature of the test piece from rising gradually, because a rise in temperature deteriorates the oxygen index in general. Other tests were conducted in accordance with the above JIS standards, although some descriptions are omitted.

[UL94 Test on Flame-Retardant Properties: Vertical Flame-Retardant Test]

In accordance with UL94 (the standards specified by Under Writers Laboratories Inc. of the United States), five test pieces each having a length of 125 mm and a width of 13.0 mm were made from the obtained sheet and tested for vertical flame-retardant properties. In the tests, each test piece was mounted vertically on a clamp and brought into contact with a 20 mm flame for 10 seconds twice, and burning behavior of the test piece was rated as V-0, V-1, or V-2. Here, the flammability ratings of V-0, V-1, and V-2 are as follows.

[Oxygen Index Evaluation Standards by Combustion Test on Plastics based on JIS K 7201-2]

The oxygen index is generally considered as follows:

| | |
|---|---|
| 22 or lower: | flammable and burns; |
| From 23 to 27: | burns but self-extinguishable; |
| 27 or higher: | flame retardant. |

[Flammability Ratings of V-0, V-1, and V-2]

V-0: flame combustion duration time is within 10 seconds for both the first and second time; furthermore, sum of the flame combustion duration time and non-flame combustion duration time for the second time is within 30 seconds; furthermore, sum of the flame combustion duration time of the five test pieces is within 50 seconds; there is no sample that burns up to a position of the fixing clamp; and there is no cotton ignition by dripped flaming particles.

V-1: flame combustion duration time is within 30 seconds for both the first and second time; furthermore, sum of the flame combustion duration time and non-flame combustion duration time for the second time is within 60 seconds; furthermore, sum of the flame combustion duration time of the five test pieces is within 250 seconds; there is no sample that burns up to a position of the fixing clamp; and there is no cotton ignition by dripped flaming particles.

V-2: flame combustion duration time is within 30 seconds for both the first and second time; furthermore, sum of the flame combustion duration time and non-flame combustion duration time for the second time is within 60 seconds; furthermore, sum of the flame combustion duration time of the five test pieces is within 250 seconds; there is no sample that burns up to a position of the fixing clamp; and there is cotton ignition by dripped flaming particles.

Note that, in the vertical flame-retardant tests, samples that failed to meet any of the above V-0, V-1, and V-2 were defined as Non-Conforming (x).

Modified polyphenylene ether resin used is as follows:

modified polyphenylene ether (hereinafter, m-PPE): XYRON340Z manufactured by Asahi Kasei Corporation, which is a composition including polyphenylene ether including poly 2,6-dimethyl-1,4-phenyloxide, polystyrene, and a phosphorus-based flame retardant (a phosphate ester compound of the above formula (5) or (6)), in which the polystyrene is high-impact polystyrene; and
modified polyphenylene ether (hereinafter, m-PPE): XYRON540Z manufactured by Asahi Kasei Corporation, which is a composition including polyphenylene ether including poly 2,6-dimethyl-1,4-phenyloxide, polystyrene, and a phosphorus-based flame retardant (a phosphate ester compound of the above formula (5) or (6)), in which the polystyrene is high-impact polystyrene.
Flame retardant (1): Fire Guard FG-8500 (a compound of the above formula (7-1)) manufactured by TEIJIN LIMITED
Flame retardant (2): Fire Guard FG-7500 (a compound of the above formula (7-2)) manufactured by TEIJIN LIMITED
Flame retardant (3): SAYTEX HP7010G (a compound represented by the above formula (8), wherein x and y are approximately 2000 and 2.7, respectively: molecular weight approximately 700,000) manufactured by Albemarle Japan Corporation
Flame retardant (4): FR-1410 (the following formula (a)) manufactured by ICL Japan Ltd.

[CHEMICAL FORMULA 12]

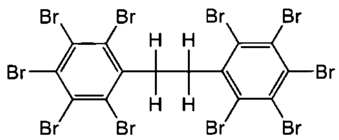

(a)

Molecular weight: 971.2
Flame retardant (5): SAYTEX 8010 (a compound having the same formula as the above formula (a) (from a different manufacturer)) manufactured by Albemarle Japan Corporation

First, materials used for the tests are the following twelve types of test materials in total.

<Materials for Test Materials used in the Tests>

Test materials 1 to 8 are made by using modified polyphenylene ether (hereinafter m-PPE): XYRON540Z manufactured by Asahi Kasei Corporation as a base and by compounding predetermined amounts of flame retardants, respectively.

Here, the test materials 1 to 3 are made by compounding 20 parts, 30 parts, and 35 parts of the flame retardant (1), i.e., Fire Guard FG-8500 manufactured by TEIJIN LIMITED, as the flame retardant to the modified PPE XYRON540Z, respectively. Also, the test materials 4 and 5 are made similarly by compounding 20 parts and 30 parts of the flame retardant (2), i.e., Fire Guard FG-7500 by TEIJIN LIMITED, as the flame retardant to the modified PPE XYRON540Z, respectively. Furthermore, the test materials 6, 7, and 8 are made similarly by compounding 20 parts, 30 parts, and 40 parts of the flame retardant (3), i.e., SAYTEX HP7010G manufactured by Albemarle Japan Corporation, as the flame retardant to the modified PPE XYRON540Z, respectively.

Here, the test material 1 to test material 8 are made by further adding predetermined amounts of three different flame retardants with specific molecular weights to XYRON540Z, which is modified PPE used as the base.

Test materials 9 and 10 are foamed sheets made of materials having different product numbers, which are a material formed of only modified polyphenylene ether (modified PPE): XYRON340Z manufactured by Asahi Kasei Corporation and a material formed of only modified polyphenylene ether (hereinafter, modified PPE): XYRON540Z manufactured by Asahi Kasei Corporation, respectively. No flame retardants other than the phosphorus-based flame retardants originally included in XYRON340Z and XYRON540Z are added to the test materials 9 and 10.

Test materials 11 and 12 are foamed sheets using a material made by adding 20 parts of FR-1410 manufactured by ICL Japan Ltd. as the flame retardant (4) to modified polyphenylene ether (modified PPE): XYRON340Z manufactured by Asahi Kasei Corporation, and a foamed sheet using a material made by adding 20 parts of SAYTEX 8010 manufactured by Albemarle Japan Corporation as the flame retardant (5) to modified polyphenylene ether (hereinafter, modified PPE): XYRON540Z manufactured by Asahi Kasei Corporation.

The test material 9 and test material 11 both use XYRON340Z manufactured by Asahi Kasei Corporation and the test material 10 and test material 12 are materials using XYRON540Z manufactured by Asahi Kasei Corporation. XYRON540Z and XYRON340Z both are made by blending PPE with PS. When considering a difference in the glass

transition temperatures Tg of PPE and PS, it is considered that the more an amount of PS blended with PPE, the lower the Tg. Thus, it is considered that XYRON340Z contains the more amount of PS than XYRON540Z does.

<Manufacturing Test Material Foamed Sheet>

Rolled rolls of foamed sheets formed of the test materials shown in the below. Table 1 were obtained and placed inside a pressure vessel. Pressure was applied inside the pressure vessel with carbon dioxide gas to 5.2 MPa to allow carbon dioxide gas to permeate into resin films for 24 hours. Next, the rolled rolls were taken out of the pressure vessel and were fed continuously into a hot-air circulating foaming furnace that is set at 160 °C so as to be held for a predetermined time to foam, thereby obtaining the PPE foamed sheets shown in Table 1.

At this time, for the test materials 11 and 12, foaming inhibition occurred with almost no foaming, and thus intended foams were not obtained. For the test material 7 and test material 8, the foaming temperature was set at 170 °C and the foaming was performed. For the test material 9 and the test material 10, the foaming temperature was set at 180 °C and the foaming was performed.

<Results of Physical Characteristic Evaluation Tests on Test Material Foamed Sheet>

Table 1 shows results of physical characteristic evaluation on test materials 1 to 12 as the test materials.

[Table 1]

| No. | Modified PPE including Phosphorus-based Flame Retardant | Compounded Amount pts.mass | Flame Retardant No. | Halogen-based Flame Retardant etc. (Manufacturer) | (Product Name) | Compounded Amount pts.mass | Foaming Ratio (.) | Foam Density ($g/cm^3$) | Average Bubble Diameter (μm) | Bubble Number Density ($pcs/mm^3$) | Relative Permittivity | Dielectric Loss Tangent | Surface Roughness (Ra:μm) | Flame-Retardant Properties | OI value |
|---|---|---|---|---|---|---|---|---|---|---|---|---|---|---|---|
| Test Material 1 | XYRON 540Z | 100 | Flame Retardant 1 | TEIJIN LIMITED | Fire Guard FG-8500 | 20 | 6.8 | 0.17 | 2.3 | $70.2\times10^8$ | 1.20 | $1.1\times10^{-3}$ | 0.12 | UL94 V-0,V-1 are satisfied | 28.2 |
| Test Material 2 | XYRON 540Z | 100 | Flame Retardant 1 | TEIJIN LIMITED | Fire Guard FG-8500 | 30 | 6.1 | 0.19 | 5.8 | $3.0\times10^6$ | 1.22 | $1.0\times10^3$ | 0.14 | UL94 V-0,V-1 are satisfied | 30.9 |
| Test Material 3 | XYRON 540Z | 100 | Flame Retardant 1 | TEIJIN LIMITED | Fire Guard FG-8500 | 35 | 4.6 | 0.25 | 16.4 | $3.7\times10^4$ | 1.33 | $1.5\times10^{-3}$ | 0.28 | UL94 V-0,V-1 are satisfied | 32.1 |
| Test Material 4 | XYRON 540Z | 100 | Flame Retardant 2 | TEIJIN LIMITED | Fire Guard FG-7500 | 20 | 6.8 | 0.17 | 3.0 | $3.0\times10^7$ | 1.21 | $1.0\times10^{-3}$ | 0.14 | UL94 V-0,V-1 are satisfied | 27.4 |
| Test Material 5 | XYRON 540Z | 100 | Flame Retardant 2 | TEIJIN LIMITED | Fire Guard FG-7500 | 30 | 6.4 | 0.18 | 5.8 | $3.0\times10^6$ | 1.23 | $1.0x10^{-3}$ | 0.13 | UL94 V-0,V-1 are satisfied | 30.5 |
| Test Material 6 | XYRON 540Z | 100 | Flame Retardant 3 | Albemarle Japan Corporation | SAYTEX HP7010G | 20 | 5.8 | 0.20 | 1.7 | $1.8\times10^8$ | 1.25 | $1.2x10^{-3}$ | 0.10 | UL94 V-0,V-1 are satisfied | 29.0 |
| Test Material 7 | XYRON 540Z | 100 | Flame Retardant 3 | Albemarle Japan Corporation | SAYTEX HP7010G | 30 | 4.6 | 0.25 | 1.9 | $1.4x10^8$ | 1.32 | $1.4x10^{-3}$ | 0.11 | UL94 V-0,V-1 are satisfied | 31.5 |
| Test Material 8 | XYRON 540Z | 100 | Flame Retardant 3 | Albemarle Japan Corporation | SAYTEX HP7010G | 40 | 2.8 | 0.41 | 21.2 | $2.0\times10^4$ | 1.57 | $2.1\times10^{-3}$ | 0.20 | UL94 V-0,V-1 are satisfied | 32.5 |
| Test Material 9 | XYRON 340Z | 100 | | | | - | 6.1 | 0.19 | 1.8 | $1.5\times10^8$ | 1.20 | $1.1\times10^{-3}$ | 0.11 | UL94 V-0,V-1 are unmet with some improvement effects | 24.8 |
| Test Material 10 | XYRON 540Z | 100 | | | | - | 6.8 | 0.17 | 2.4 | $5.9\times10^7$ | 1.20 | $1.0\times10^{-3}$ | 0.12 | UL94 V-0,V-1 are unmet with some improvement effects | 25.4 |
| Test Material 11 | XYRON 340Z | 100 | Flame Retardant 4 | ICL Japan Ltd. | FR-1410 | 20 | 1.1 | 1.08 | - | - | - | - | - | UL94 V-0,V-1 are satisfied | 29.3 |

(continued)

| No. | Modified PPE including Phosphorus-based Flame Retardant | Compounded Amount pts.mass | Flame Retardant No. | Halogen-based Flame Retardant etc. (Manufacturer) | (Product Name) | Compounded Amount pts.mass | Foaming Ratio (.) | Foam Density ($g/cm^3$) | Average Bubble Diameter (μm) | Bubble Number Density ($pcs/mm^3$) | Relative Permittivity | Dielectric Loss Tangent | Surface Roughness (Ra:μm) | Flame-Retardant Properties | OI value |
|---|---|---|---|---|---|---|---|---|---|---|---|---|---|---|---|
| Test Material 12 | XYRON 540Z | 100 | Flame Retardant 5 | Albemarle Japan Corporation | SAYTEX 8010 | 20 | 1.1 | 1.07 | - | - | - | - | - | UL94 V-0,V-1 are satisfied | 29.5 |

<Foaming Performance and Characteristics connected with Bubble Structure of Modified PPE Foamed Sheet>

Evaluating foamability of the test materials by the foaming ratio and the density, except for the test materials 11 and 12, for the test material 1 to test material 8 and the test materials 9 and 10, in which foaming occurred appropriately, the foaming ratio is within a range of 2 to 10 times, or more specifically within a range of 2.8 to 6.8 times; and the foam density is within a range of 0.10 to 0.50, or more specifically within a range of 0.17 to 0.41. In contrast, because of the foaming inhibition by the added flame retardants, the foaming ratio of the test materials 11 and 12 is 1.1 and the density is 1.07 to 1.08 with almost no change in density due to foaming, and thus it was impossible to obtain the intended foamed sheets.

As evaluation parameters for evaluating bubble structures of the foams, the bubble diameter (the average bubble diameter) and the bubble number density were used. The results of the test show that the average bubble diameter satisfies a range of 1 to 22 μm, or more specifically a range of 1.7 to 21.2 μm, and, although $10^4$ or higher was an aim, the bubble number density satisfies a range of $2.0 \times 10^4$ to $7.2 \times 10^8$ bubbles/$cm^3$. The modified resin foamed sheet of the present invention had the predetermined average bubble diameter and bubble number density.

<Dielectric Characteristics of Modified PPE Foamed Sheet>

Looking at the test results of the relative permittivity and dielectric loss tangent (tan $\delta$) as dielectric characteristics of the test material 1 to test material 8 obtained by the cavity resonator perturbation method using the network analyzer, the dielectric characteristics were excellent since the average bubble diameter satisfied 1 to 22 μm and the bubble number density satisfied $10^4$ or higher. For the test material 1 to test material 8, the relative permittivity was 1.20 to 1.57 and the dielectric loss tangent tan $\delta$ was $1.0 \times 10^{-3}$ to $1.5 \times 10^{-3}$. For the test material 8 and test material 9, the relative permittivity was both 1.20 and the dielectric loss tangent tan $\delta$ was $1.0 \times 10^{-3}$ to $2.1 \times 10^{-3}$. Thus, regardless of whether polymer-based flame retardants were added or not, the relative permittivity and dielectric loss tangent were both excellent.

Also, for the test materials 1 to 10, since the average bubble diameter is 22 μm or less and within the range of 1.7 to 21.2 μm, it is expected not only the dielectric characteristics in the GHz band are low but also reflection diffusion loss at the time of transmission through the foamed sheet is low, given the contrast between wavelength and the average bubble diameter. Here, for the test materials 11 and 12, foaming inhibition occurred and no foamed sheets were obtained, and thus dielectric characteristics were not evaluated.

<Surface Characteristics of Modified PPE Foamed Sheet>

As the surface characteristics of the modified PPE sheets, average values of results of Ra of five measurements in each of MD and TD directions of the foam surface are shown for the test material 1 to test material 8 and the test materials 9 and 10, except for the test materials 11 and 12, in which normally-foamed foamed sheets were not obtained. Although the surface roughness is large for the test materials 3 and 8, the arithmetic mean surface roughness Ra is 0.5 μm or less and in a range of 0.10 to 0.30 μm even if the test materials 3 and 8 are included. Except for the test materials 3 and 8, the difference between the materials in the arithmetic mean surface roughness Ra is small, and Ra is within a range of 0.10 to 0.14 μm, satisfying 0.20 μm or less. It is considered that the arithmetic mean surface roughness Ra of the present invention shows better surface characteristics than the surface roughness obtained by bead foaming or the like even when taking the upper limit of Ra, which is the large arithmetic mean surface roughness and is 0.5 μm or less. Here, for the test materials 11 and 12, foaming inhibition occurred and no foamed sheets were obtained, and thus surface characteristics were not evaluated.

<Flame-Retardant Properties of Modified PPE Foamed Sheet>

Table 1 shows evaluation results of flame-retardant property tests conducted on the test materials. In the table, oxygen index is denoted as OI value. The results of the vertical flame-retardant property tests in accordance with UL94 show that the modified PPE foamed sheets of the test materials 1 to 8, in which the predetermined amounts of the phosphorus-based flame retardant and polymer-based retardant are added to the modified PPE foamed sheets, have the oxygen index ranging from 27.4 to 32.5, exceeding 27, which is a standard of the oxygen index for the flame-retardant properties, thereby satisfying the V-0 and V-1 standards of UL 94. In contrast, for the test material 9 made of a XYRON340Z foamed sheet in which only the phosphorus-based flame retardant was added to the modified PPE foamed sheet as well as the test material 10 similarly made of a XYRON540Z foamed sheet in which only the predetermined amount of the phosphorus-based flame retardant was added to the modified PPE foamed sheet, there was no foaming inhibition due to the added flame retardant and there was an improvement effect in the oxygen index. However, the oxygen index was 24.8 and 25.4, respectively, and, compared to the above test materials 1 to 8, despite having the self-extinguishing properties, the test materials 9 and 10 lack in the flame-retardant properties and failed to meet either V-0 or V-1 of the UL94 standard. Also, since the oxygen index exceeds 27, the test materials 1 to 8 are considered to have the flame-retardant properties. Here, in the cases of only the phosphorus-based flame retardant, although flame-retardant properties were improved

because of the added flame retardant when compared to the modified PPE including no flame retardants of non-flame-retardant grades, the content of the flame retardant was small with no polymer-based flame retardants and thus it was unable to meet V-0 to V- 1 of UL-94. Here, for reference, although not particularly mentioned in Working Examples, it is confirmed that the test materials 8 and 9 in non-foamed states without foaming satisfy the V-0 standard when tested for the UL standard flame-retardant tests.

In contrast, for the test materials 11 and 12 in which the halogen-based flame retardant having a molecular weight below 1,000 is added, the amounts of flame retardants are increased by adding the halogen-based flame retardant in addition to the phosphorus-based flame retardant and thus the oxygen indices are 29.3 and 29.5, respectively, which are higher than in the case of only the phosphorus-based flame retardant, thereby improving the flame-retardant properties. Although the flame-retardant properties satisfy the V-0 standard of UL94, addition of such the flame retardants caused foaming inhibition to the modified PPE, and modified PPE foamed sheets were not obtained because of the foaming inhibition.

In the present invention, the polymer-based flame retardant of oligomer or higher was used as the halogen-based flame retardant. Low molecular weight flame retardants and metal hydroxide flame retardants, which are usually used as flame retardants, may cause foaming inhibition because expansion of the flame retardant at high temperatures by foaming gas or permeation of foaming gas into the flame retardant do not occur. However, in the case of the polymer-based flame retardant, it is considered that permeation of carbon dioxide gas into the flame retardant is possible and, in addition, the flame retardant has appropriate viscoelasticity at high temperatures around the foaming temperature, and thus foaming inhibition does not occur and foams having fine bubbles can be formed.

<Summary of Test Results>

From the above, to obtain the modified PPE foamed sheet of the present invention, as shown in the test materials 9 and 10, in the case of the modified PPE resin in which the predetermined amount of the phosphorus-based flame retardant is added to the modified PS resin, which is made by adding a predetermined range of PS to PPE, the foamed sheet having excellent surface characteristics with appropriate bubble structures and dielectric characteristics can be obtained. However, even if the flame-retardant properties can be improved and the self-extinguish properties can be given to the flammable resin, the flame-retardant properties thereof still cannot meet the UL standard since the amount of added flame retardant is small. Also, if the low-molecular weight halogen-based flame retardant is added to ensure the flame-retardant properties as in the cases of the test materials 11 and 12, although the flame-retardant properties satisfy the UL standard, foaming inhibition occurs and the predetermined foamed sheets cannot be obtained.

In contrast, in the cases of the test materials 1 to 8, which are the foamed sheets added with the polymer-based flame retardants of oligomers or more with the weight-average molecular weights of 1,000 or more and 1,000,000 or less in addition to the phosphorus-based flame retardant as the flame retardant, no foaming inhibition occurs and the foamed sheets that excel in the flame-retardant properties in addition to the bubble structures, dielectric characteristics, and surface characteristics can be obtained. Furthermore, the modified PPE foamed sheet of the present invention not only excels in dielectric characteristics but also has the small average bubble diameter of the foamed sheet. Thus, when used for circuit substrates in the GHz band or the like, transmission loss as well as reflection scattering loss can be kept low, and, at the same time, when a conductor such as copper foil, on which circuits are formed, is placed and pasted onto the present foamed sheet, an influence on skin effects of the circuits or the conductor on the base foamed sheet can be reduced since the foamed sheet has the excellent surface characteristics.

Satisfying the bubble structure, bubble density, surface characteristics, and flame-retardant properties at the same time as above can be achieved only by making the foaming process a batch-type fine foaming process adjusted for the modified PPE resin and having a combination of the phosphorus-based flame retardant and the halogen-based polymer-based flame retardant of oligomers or more having the predetermined molecular weights as the flame retardant. According to the present invention, the thin modified PPE foamed sheet having a thickness up to 50 $\mu$m can be obtained.

<Observations>

As can be seen from Table 1 above, the halogen-based flame retardants (1) to (3) are compounded in the modified polyphenylene ether foamed sheets of the test materials 1 to 8, showing the excellent flame-retardant properties (UL94 V-0). On the other hand, there was no significant effects on the electrical characteristics (the relative permittivity and dielectric loss tangent) by including the above halogen-based flame retardants, and the electrical characteristics were no way inferior to those of the modified polyphenylene ether foamed sheets of the test materials 9 and 10 that include no halogen-base flame retardants and only the predetermined amounts of the phosphorus-based flame retardants. That is, when producing the modified polyphenylene ether foams using the fine foaming method in the present invention, although the flame-retardant properties may improve, it is impossible to obtain the foamed sheets that satisfy the UL94 standards by adding only the predetermined amounts of the phosphorus-based flame retardants. However, by combining the halogen-based flame retardants having the predetermined molecular weights with the phosphorus-based flame retardants, it is possible to obtain the foamed sheets that satisfy the V-0, V- 1 performance of the UL94 standard, with the extremely low relative permittivity and dielectric loss tangent at high frequencies and with the high flame-retardant properties while maintaining the surface quality of the foamed sheets. At this time, it is also advantageous to be able to obtain the above modified polyphenylene ether foamed sheets without using a cross-linking agent or a bubble core agent, although the cross-linking agent or bubble core agent may be used. Even for those added with the predetermined amounts of only the phosphorus-based flame retardants, the improvement effects on the flame-retardant properties are recognized, and, judging from the oxygen index level, it is considered that the foamed sheets have self-extinguishing properties while having combustibility, and the bubble structures, dielectric characteristics, and surface characteristics of the foams are excellent, and thus the foamed sheets can be sufficiently used depending on the application and form of use.

**Claims**

**1.** A modified polyphenylene ether resin foamed sheet obtained by foaming modified polyphenylene ether resin that includes a flame retardant, wherein
the modified polyphenylene ether resin foamed sheet has a relative permittivity ranging from 1.10 to 2.00 and a dielectric loss tangent (tan $\delta$) ranging from $0.5 \times 10^{-3}$ to $2.5\times 10^{-3}$.

**2.** The modified polyphenylene ether resin foamed sheet according to claim 1, wherein
an arithmetic mean surface roughness Ra of a surface of the modified polyphenylene ether resin foamed sheet is 0.50 $\mu$m or less.

**3.** The modified polyphenylene ether resin foamed sheet according to claim 1, wherein
the modified polyphenylene ether resin foamed sheet includes only a phosphorus-based flame retardant as the flame retardant.

**4.** The modified polyphenylene ether resin foamed sheet according to claim 1, wherein
the modified polyphenylene ether resin foamed sheet includes, as the flame retardant, both a halogen-based flame retardant with a weight-average molecular weight of 1,000 or more and 1,000,000 or less and the phosphorus-based flame retardant.

**5.** The modified polyphenylene ether resin foamed sheet according to claim 3 or claim 4, wherein
the modified polyphenylene ether resin foamed sheet has the relative permittivity ranging from 1.20 to 1.57 and the dielectric loss tangent (tan $\delta$) ranging from $1.0 \times 10^{-3}$ to $2.1\times 10^{-3}$.

**6.** A modified polyphenylene ether resin foamed sheet obtained by foaming modified polyphenylene ether resin that includes, as flame retardants, both a halogen-based flame retardant with a weight-average molecular weight of 1,000 or more and 1,000,000 or less and a phosphorus-based flame retardant, wherein
an average bubble diameter of bubbles of the modified polyphenylene ether resin foamed sheet is 1 to 30 $\mu$m and bubble number density is $1.8 \times 10^4$ to $9 \times 10^8$ bubbles/mm$^3$.

**7.** The modified polyphenylene ether resin foamed sheet according to claim 6, wherein
the average bubble diameter of bubbles of the modified polyphenylene ether resin foamed sheet is 1 to 22 $\mu$m and the bubble number density is $2.0 \times 10^4$ to $8 \times 10^8$ bubbles /mm$^3$.

**8.** The modified polyphenylene ether resin foamed sheet according to claim 1 or claim 6, wherein
the modified polyphenylene ether resin foamed sheet has an average sheet thickness of 0.05 mm to 2.0 mm.

**9.** The modified polyphenylene ether resin foamed sheet according to claim 4 or claim 6, wherein
when the modified polyphenylene ether resin foamed sheet is used and tested in accordance with the UL-94 vertical method (a 20 mm vertical combustion test) of the U.S. UL standards to evaluate flame-retardant properties, results of the test satisfy V-0 or V-1 standards.

**10.** The modified polyphenylene ether resin foamed sheet according to claim 1 or claim 6, wherein
the modified polyphenylene ether resin foamed sheet is used for housings for electric/electronic components, electrical insulation materials, sealing materials, protector materials, high-frequency substrates, or substrates for electromagnetic wave controlling members.

**11.** Housings for electric/electronic components, electrical insulation materials, sealing materials, protector materials, high-frequency substrates, or substrates for electromagnetic wave controlling members that can be obtained by using the modified polyphenylene ether resin foamed sheet according to claim 1 or claim 6.

**Amended claims under Art. 19.1 PCT**

**1.** (amended) : A modified polyphenylene ether resin foamed sheet obtained by foaming modified polyphenylene ether resin including a flame retardant, wherein

the modified polyphenylene ether resin foamed sheet includes, as the flame retardant, both a halogen-based flame retardant with a weight-average molecular weight of 1,000 or more and 1,000,000 or less and the phosphorus-based flame retardant; and
the modified polyphenylene ether resin foamed sheet has a relative permittivity ranging from 1.10 to 2.00 and a dielectric loss tangent (tan $\delta$) ranging from $0.5 \times 10^{-3}$ to $2.5\times 10^{-3}$.

**2.** The modified polyphenylene ether resin foamed sheet according to claim 1, wherein
an arithmetic mean surface roughness Ra of a surface of the modified polyphenylene ether resin foamed sheet is 0.50 $\mu$m or less.

**3.** (deleted)

**4.** (deleted)

**5.** (amended): The modified polyphenylene ether resin foamed sheet according to claim 1 or claim 2, wherein
the modified polyphenylene ether resin foamed sheet has the relative permittivity ranging from 1.20 to 1.57 and the dielectric loss tangent (tan $\delta$) ranging from $1.0 \times 10^{-3}$ to $2.1\times 10^{-3}$.

**6.** (amended): A modified polyphenylene ether resin foamed sheet obtained by foaming modified polyphenylene ether resin including a flame retardant, wherein

the modified polyphenylene ether resin foamed sheet includes, as the flame retardant, both a halogen-based flame retardant with a weight-average molecular weight of 1,000 or more and 1,000,000 or less and a phosphorus-based flame retardant; and
an average bubble diameter of bubbles of the modified polyphenylene ether resin foamed sheet is 1 to 30 $\mu$m and bubble number density is $1.8 \times 10^4$ to $9 \times 10^8$ bubbles /mm$^3$.

**7.** The modified polyphenylene ether resin foamed sheet according to claim 6, wherein
the average bubble diameter of bubbles of the modified polyphenylene ether resin foamed sheet is 1 to 22 $\mu$m and the bubble number density is $2.0 \times 10^4$ to $8 \times 10^8$ bubbles /mm$^3$.

**8.** The modified polyphenylene ether resin foamed sheet according to claim 1 or claim 6, wherein
the modified polyphenylene ether resin foamed sheet has an average sheet thickness of 0.05 mm to 2.0 mm.

**9.** (amended): The modified polyphenylene ether resin foamed sheet according to claim 1 or claim 6, wherein
when the modified polyphenylene ether resin foamed sheet is used and tested in accordance with the UL-94 vertical method (a 20 mm vertical combustion test) of the U.S. UL standards to evaluate the flame-retardant properties, results of the test satisfy V-0 or V-1 standards.

**10.** The modified polyphenylene ether resin foamed sheet according to claim 1 or claim 6, wherein
the modified polyphenylene ether resin foamed sheet is used for housings for electric/electronic components, electrical insulation materials, sealing materials, protector materials, high-frequency substrates, or substrates for electromagnetic wave controlling members.

**11.** Housings for electric/electronic components, electrical insulation materials, sealing materials, protector materials, high-frequency substrates, or substrates for electromagnetic wave controlling members that can be obtained by using the modified polyphenylene ether resin foamed sheet according to claim 1 or claim 6.

**Statement under Art. 19.1 PCT**

Written explanation for amendments made under Article 19 Section 1
Claim 1 is amended by including the content of Claim 7.
Claim 7 is no longer necessary due to the above amendment and deleted.
Claim 9 is amended by adding an application of a light reflector due to the amendment made to Claim 1, and Claim 11 is amended by adding the use of the light reflector to the USE claim due to the amendment made to Claim 1.
Claims 10 and 12 are no longer necessary due to the amendments made to Claims 9 and 11 and are deleted.

## INTERNATIONAL SEARCH REPORT

International application No.
**PCT/JP2024/001659**

**A. CLASSIFICATION OF SUBJECT MATTER**

***C08J 9/04***(2006.01)i
FI: C08J9/04 101; C08J9/04 CEZ

According to International Patent Classification (IPC) or to both national classification and IPC

**B. FIELDS SEARCHED**

Minimum documentation searched (classification system followed by classification symbols)

B29C44/00-44/60; B29C67/20; C08J9/00-9/42; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 7158600 B2 (ASAHI KASEI KABUSHIKI KAISHA) 21 October 2022 (2022-10-21)<br>claim 1, paragraphs [0032], [0038], [0051], [0077], [0079], table 1, example 3 | 1-3, 5, 8, 10-11<br>4, 6-7, 9 |
| A | JP 2003-138051 A (KANEGAFUCHI CHEMICAL INDUSTRY CO., LTD.) 14 May 2003 (2003-05-14)<br>claims, example 15 | 1-11 |
| A | JP 2004-123972 A (KANEGAFUCHI CHEMICAL INDUSTRY CO., LTD.) 22 April 2004 (2004-04-22)<br>entire text, all drawings | 1-11 |
| A | JP 2014-117813 A (JSP CORPORATION) 30 June 2014 (2014-06-30)<br>entire text, all drawings | 1-11 |
| A | JP 2001-250423 A (ACHILLES CORP.) 14 September 2001 (2001-09-14)<br>entire text, all drawings | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 April 2024** | **16 April 2024** |

| Name and mailing address of the ISA/JP | Authorized officer |
|---|---|
| **Japan Patent Office (ISA/JP)<br>3-4-3 Kasumigaseki, Chiyoda-ku, Tokyo 100-8915<br>Japan** | <br>Telephone No. |

Form PCT/ISA/210 (second sheet) (July 2022)

**INTERNATIONAL SEARCH REPORT**

International application No.
**PCT/JP2024/001659**

**C. DOCUMENTS CONSIDERED TO BE RELEVANT**

| Category* | Citation of document, with indication, where appropriate, of the relevant passages | Relevant to claim No. |
|---|---|---|
| A | JP 2006-516297 A (MATSUSHITA ELECTRIC WORKS, LTD.) 29 June 2006 (2006-06-29) entire text, all drawings | 1-11 |
| A | JP 2021-143294 A (JSP CORPORATION) 24 September 2021 (2021-09-24) entire text, all drawings | 1-11 |

Form PCT/ISA/210 (second sheet) (July 2022)

**INTERNATIONAL SEARCH REPORT**
**Information on patent family members**

International application No.
**PCT/JP2024/001659**

| Patent document cited in search report | Publication date (day/month/year) | Patent family member(s) | Publication date (day/month/year) |
|---|---|---|---|
| JP 7158600 B2 | 21 October 2022 | US 2023/0151175 A1<br>claim 1, paragraphs [0071]-[0074], [0087], [0132], [0133], example 3 | |
| JP 2003-138051 A | 14 May 2003 | (Family: none) | |
| JP 2004-123972 A | 22 April 2004 | (Family: none) | |
| JP 2014-117813 A | 30 June 2014 | US 2014/0171533 A1<br>entire text, all drawings | |
| JP 2001-250423 A | 14 September 2001 | (Family: none) | |
| JP 2006-516297 A | 29 June 2006 | US 2004/0146692 A1<br>entire text, all drawings | |
| JP 2021-143294 A | 24 September 2021 | US 2023/0151177 A1<br>entire text, all drawings | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5642521 B
- JP 2017155196 A
- JP 6106420 B
- JP 2008303247 A
- JP 2021136540 A
- JP 3138488 B
- JP 5809895 B
- JP 2010123933 A
- FR 1410